# EUROPÄISCHE PATENTSCHRIFT

(11) **EP 2 878 662 B1**
(45) Veröffentlichungstag und Bekanntmachung des Hinweises auf die Patenterteilung: **19.09.2018**
(21) Anmeldenummer: 14189218.2
(22) Anmeldetag: 16.10.2014
(51) Int. Cl.: C12C 7/17

(54) **VERFAHREN UND VORRICHTUNG ZUR GEWINNUNG VON WÜRZE DURCH ABLÄUTERN VON MAISCHE MIT EINEM LÄUTERBOTTICH**
METHOD AND DEVICE FOR OBTAINING WORT BY CLARIFYING MASH WITH A LAUTER TUN
PROCÉDÉ ET DISPOSITIF POUR OBTENIR DU MOÛT PAR FILTRATION DE TREMPE AVEC CUVE DE FILTRATION

(30) Priorität: 02.12.2013 DE 102013113299
(43) Veröffentlichungstag der Anmeldung: 03.06.2015
(73) Patentinhaber: GEA BREWERY SYSTEMS GMBH, 97318 Kitzingen (DE)
(72) Erfinder: Hübner, Thomas, 97084 Würzburg (DE); Schreder, Marc, 97318 Kitzingen (DE); Kantelberg, Bernd, 97332 Volkach (DE)
(74) Vertreter: advotec.

(56) Entgegenhaltungen:
- EP-A1- 0 419 442
- EP-A1- 1 384 773
- DE-A1- 10 147 974
- DE-A1-102010 030 955
- DE-A1-102011 081 648
- DE-A1-102011 086 023

## Beschreibung

Die Erfindung betrifft ein Verfahren und eine Vorrichtung zur Gewinnung von Würze durch Abläutern von Maische mit einem Läuterbottich nach der Lehre der Hauptansprüche.

Bei der chargenbezogenen Herstellung von Bier mittels einer Sudhausanlage bildet die Abläuterung der Maische mittels Läuterbottich einen der wichtigsten Produktionsschritte. Die Maische enthält große Mengen von Feststoffpartikeln. Denn die Maische wird durch Mischen von Wasser und einer Stärkequelle, beispielsweise Malz, Gerste, Reis, Mais usw., hergestellt, um die gewünschten Inhaltsstoffe (Extrakt) aus der verwendeten Stärkequelle, beispielsweise dem Malz aus Braugerste, zu lösen. Durch das Abläutern der Maische im Läuterbottich sollen diese Feststoffe aus der Maische entfernt werden, um dadurch Bierwürze zu erhalten. Die Konzentration der Würze nach dem Abläutern variiert sehr stark, je nachdem, zu welchem Zeitpunkt des Läutervorgangs die Würze aus dem Läuterbottich abgeleitet wurde. So ist die Würzekonzentration während der Nachgüsse deutlich niedriger, da der Treberkuchen während der Nachgüsse durch Zugabe von Frischwasser ausgelaugt wird. Aus Gründen der Prozessökonomie und der Produktqualität ist es jedoch wünsehenswert, die Verdünnung der Würze während des Abläuterns möglichst gering zu halten. Unterschreitet nämlich die Konzentration der Läuterwürze das gewünschte Maß, so muss das überschüssige Wasser aus der Würze durch energieaufwendige Verfahren, beispielsweise bei der Würzekochung, ausgetrieben werden, wodurch hohe Produktionskosten durch zusätzlichen Energiebedarf entstehen. Anders herum muss der Extrakt möglichst vollständig ausgewaschen werden, da er ansonsten für den Prozess verloren ist, was hohe Rohstoffkosten bedeutet. Insbesondere für das so genannte "high-gravity-brewing" sind hohe Würzekonzentrationen nach Abläutern von großer Bedeutung. Insbesondere soll eine möglichst hohe Vorderwürzekonzentration erreicht werden. Als Vorderwürze bezeichnet man die Würze mit der höchsten Konzentration, die als erstes aus dem Läuterbottich abgezogen wird.

Ein Problem im Hinblick auf die unerwünschte Verdünnung der Würze durch das Abläutern stellt die so genannte Senkbodenvorlage dar. Vor der Einbringung der Maische in den Läuterbottich müssen nämlich die Sammelleitungen, mit denen die Würze aus dem Läuterbottich durch Sammelöffnungen am Läuterbottichboden abgeleitet werden kann, sowie der Raum zwischen Senkboden und Bottichboden entlüftet werden, da ansonsten die enthaltene Luft die Filtration behindert. Außerdem ist es erstrebenswert, die Luft vom Produkt, der Würze, fern zu halten.

Bei konventionellen Läuterbottichen ist vorgesehen, dass als Senkbodenvorlage zur Entlüftung der Sammelleitungen bzw. des Freiraums zwischen Senkboden und Läuterbottichboden angewärmtes Wasser verwendet wird. Dieses Vorgehen hat den Nachteil, dass die Maische nach dem Abmaischen und beim anschließenden Trübwürzepumpen mit dem Wasser der Senkbodenvorlage vermischt und entsprechend verdünnt wird. Diese Verdünnung führt letzten Endes zu einer Absenkung der Würzekonzentration während des Abläuterns und damit zu schlechteren Ausbeuten.

Aus der EP 2 404 990 A1 ist ein Verfahren bekannt, bei welchem als Senkbodenvorlage nicht Frischwasser verwendet wird. Stattdessen ist zwischen der Abmaischleitung und dem Läuterbottich eine Verbindungsleitung vorgesehen, durch die das Wasser, das zum Ausschieben der Maische aus der Abmaischleitung verwendet wird, und/oder das Wasser, das zur Reinigung der Abmaischleitung verwendet wird, als Senkbodenvorlage in den Läuterbottich eingeleitet werden kann. Auf diese Weise wird das Wasser aus der Abmaischleitung zugleich auch als Wasser für die Senkbodenvorlage verwendet, so dass die Maische nicht doppelt, nämlich durch das Wasser aus der Abmaischleitung und das Wasser aus der Senkbodenvorlage, verdünnt wird. Letztendlich bleibt es aber dabei, dass die Maische durch das Wasser in der Senkbodenvorlage in unerwünschter Weise verdünnt wird.

Aus der EP 1 683 854 B1 ist ein Verfahren bekannt, bei dem die Senkbodenvorlage sowie die Trübwürze am Beginn der Läuterung in einen Glattwasser- oder Trubtank geleitet werden, um die Maische nicht unnötig zu verdünnen und eine schnelle Läuterung zu erreichen.

Aus der DE 10 2011 081 648 A1 ist ein Verfahren zur Herstellung von Bier bekannt, bei dem die Würze in einen hochkonzentrierten Teil und in einen niedrig konzentrierten Teil aufgeteilt wird. Die beiden Teile der Würze werden getrennt voneinander weiterverarbeitet.

Aufgabe der vorliegenden Erfindung ist es deshalb, ein neues Verfahren zur Gewinnung von Würze durch Abläutern von Maische mit einem Läuterbottich vorzuschlagen, mit dem die unerwünschte Verdünnung der Maische durch Wasser reduziert wird. Weiter ist es Aufgabe der vorliegenden Erfindung, eine Vorrichtung zur Gewinnung von Würze mit einem Läuterbottich zur Durchführung des erfindungsgemäßen Verfahrens vorzuschlagen.

Vorteilhafte Ausführungsformen der Erfindung sind Gegenstand der Unteransprüche.

Kerngedanke des erfindungsgemäßen Verfahrens ist es, dass Maische aus einer vorgeklärten Maischefraktion zur Entlüftung der Sammelleitungen bzw. des Freiraums zwischen Senkboden und Läuterbottichboden, im Folgenden als Senkbodenvorlage bezeichnet, verwendet wird. Demgemäß wird vor dem Abmaischen zunächst eine vorgeklärte Maischefraktion durch Klärung von Maische hergestellt, wobei die vorgeklärte Maischefraktion dadurch charakterisiert ist, dass sie keine groben Feststoffpartikel mehr enthält. Das Maß der Vorklärung der Maische muss dabei so gehalten sein, dass eine übergebührliche Verschmutzung der Sammelleitungen und des Freiraums zwischen Senkboden und Läuterbottichboden vermieden wird.

Bevor dann die zu läuternde Maische in den Läuterbottich abgemaischt wird, wird zunächst Maische aus der vorgeklärten Maischefraktion als Senkbodenvorlage in den Läuterbottich eingeleitet, um die Sammelleitungen und/oder den Freiraum zwischen Senkboden und Läuterbottichboden zu befüllen.

Sobald die Sammelleitungen und/oder der Freiraum zwischen Senkboden und Läuterbottichboden in ausreichendem Maß mit Maische aus der vorgeklärten Maischefraktion befüllt sind, kann dann das Abmaischen der zu läuternden Maische in dem Läuterbottich beginnen. Sobald vollständig abgemaischt ist, beginnt dann der eigentliche Abläutervorgang zur Gewinnung von Würze durch Filtration der Maische am Treberkuchen im Läuterbottich. Welche Prozessschritte das Abläutern selbst dann umfassen, ist grundsätzlich beliebig. Üblicherweise wird zu Beginn des Abläuterns mit dem Trübwürzepumpen begonnen, um einen Treberkuchen mit ausreichender Filterwirkung auszubilden und die noch feststoffbelastete, trübe Würze aus den Sammelleitungen und dem Bereich unter dem Senkboden zu entfernen. Beim Trübwürzepumpen wird die Maische durch die Treberschicht und den Senkboden hindurchgeleitet und gelangt über den Freiraum zwischen Senkboden und Läuterbottichboden in die Sammelleitungen. Da Sammelleitungen und/oder der Freiraum zwischen Senkboden und Läuterbottichboden bereits mit Maische aus der vorgeklärten Maischefraktion befüllt sind, wird eine Verdünnung der am Treberkuchen abgeläuterten Maische vermieden. Ein späteres Verdrängen des als Senkbodenvorlage verwendeten Wassers kann somit vermieden werden. Sobald die Würze ausreichend klar abläuft, wird das Zirkulieren der Trübwürze beendet und das eigentliche Läutern der Würze in einen Vorlauftank, die Würzepfanne oder ein beliebiges anderes Gefäß begonnen.

Wie stark die als Senkbodenvorlage verwendete Maische vorgeklärt werden muss, ist grundsätzlich abhängig von den Gegebenheiten der jeweils vorhandenen Läuterbottichanordnung. Als praxistauglich haben sich vorgeklärte Maischefraktionen erwiesen, die im Wesentlichen keine Feststoffpartikel mit einer Partikelgröße von größer als 1 mm aufweisen. Feststoffpartikel mit einer Partikelgröße von kleiner als 1 mm verursachen in den Sammelleitungen und dem Freiraum zwischen Senkboden und Läuterbottichboden keine Verunreinigungen oder Anhaftungen, die nicht während des nachfolgenden Abläuterns entfernt werden könnten. Besonders vorteilhaft ist eine Vorklärung der Maische, so dass keine Partikel von mehr als 0,7 mm Größe mehr enthalten sind.

Wie bereits erläutert, wird die als Senkbodenvorlage verwendete Maische aus der vorgeklärten Maischefraktion mit der am Treberkuchen und der am Senkboden abgefilterten Würze vermischt. Um zu gewährleisten, dass durch diese Vermischung keine substantielle Änderung der Konzentration der nach dem Abläutern erhaltenen Würze bewirkt wird, ist es besonders vorzugswürdig, wenn die vorgeklärte Maischefraktion, die als Senkbodenvorlage dient, und die durch Abmaischung in den Läuterbottich gelangte abzuläuternde Maische die jeweils gleiche Konzentration aufweisen.

In welcher Weise die vorgeklärte Maischefraktion erhalten wird, ist grundsätzlich beliebig. Um den gerätetechnischen Aufwand zu minimieren, ist gemäß einer Verfahrensvariante vorgesehen, dass zur Gewinnung der vorgeklärten Maischefraktion ein Teil der mittels des Läuterbottichs abgeläuterten Würze eines vorhergehenden Suds zwischengespeichert wird. Dies bedeutet mit anderen Worten, dass zur Klärung der Maische, die als Senkbodenvorlage dienen soll und aus der deshalb die groben Feststoffpartikel entfernt sein müssen, der Läuterbottich eingesetzt wird. Denn beim Abläutern eines Suds wird die Maische im Wesentlichen vollständig geklärt, und die so erhaltene Würze enthält im Wesentlichen überhaupt keine Feststoffpartikel mehr. Diese durch Abläutern vollständig geklärte Würze kann in einem geeigneten Gefäß, beispielsweise dem Würzevorlauftank, zwischengespeichert werden. Vor dem Abläutern des nächsten Suds kann dann ein geringer Teil der bereits abgeläuterten Würze des vorhergehenden Suds als Senkbodenvorlage über eine Verbindungsleitung in den Läuterbottich zurückgepumpt werden. Ein Verlust von Läuterwürze wird dadurch nicht bedingt, da die als Senkbodenvorlage verwendete Würze mit dem nächsten Sud aus dem Läuterbottich wiederum abgeläutert wird. Natürlich ist es auch möglich eine entsprechende Menge der Würze für die Senkbodenvorlage in einem separaten Gefäß zu puffern. Vorteilhaft an dieser Variante ist, dass sogar Vorderwürze eines vorherigen Sudes als Senkbodenvorlage verwendet werden kann.

Durch die Vermischung von Maische bzw. Würze aus unterschiedlichen Suden können Probleme hinsichtlich der Qualität der einzelnen Sude, auftreten. So ist es z.B. nicht erwünscht oder erlaubt, Würzen bestimmter Biersorten zu mischen (beispielsweise eine Weizenbierwürze mit einer Pilswürze oder dunkle und helle Würzen). Zur Vermeidung solcher Probleme, die durch Vermischung unterschiedlicher Sude entstehen, ist es zur Durchführung des erfindungsgemäßen Verfahrens möglich, die Maische eines Suds nach dem Maischprozess in zumindest zwei Teile aufzuteilen. Der eine Teil der Maische wird dann durch eine Klärvorrichtung geleitet, um die groben Feststoffpartikel aus diesem Teil der Maische zu entfernen. Im Ergebnis wird also durch das Durchleiten des einen Teils der Maische durch die Klärvorrichtung die zur Durchführung des erfindungsgemäßen Verfahrens notwendige vorgeklärte Maischefraktion gewonnen. Der andere Teil der Maische wird nach Einleitung der vorgeklärten Maischefraktion als Senkbodenvorlage in den Läuterbottich in der üblichen Weise in den Läuterbottich abgemaischt. Im Ergebnis befindet sich dann im Läuterbottich nur ein sortenreiner Sud, wobei der mit der Klärvorrichtung vorgeklärte Teil der Maische als Senkbodenvorlage dient, wohingegen die übrige Maische oberhalb des Senkbodens zur Abläuterung ansteht. Wird dann das Trübwürzepumpen begonnen, werden beide Teile der Maische des gleichen Suds wieder miteinander vermischt, und eine Änderung des Konzentrationsgrades ist zuverlässig ausgeschlossen. Auch kann die Qualität jedes einzelnen Suds problemlos kontrolliert und dokumentiert werden, da keine Maische bzw. Würze unterschiedlicher Sude miteinander vermischt werden.

Welche Klärvorrichtung zur Entfernung der groben Feststoffpartikel bei der Gewinnung der vorgeklärten Maischefraktion eingesetzt wird, ist grundsätzlich beliebig. Besonders einfach und kostengünstig lässt sich die notwendige Vorklärung der Maische erreichen, wenn die Maische durch eine Sieb- und/oder Filtrationsvorrichtung geleitet wird. In den meisten Fällen wird bereits eine Siebvorrichtung mit ausreichend feinem Sieb zur Gewinnung der vorgeklärten Maischefraktion ausreichen, da die vorgeklärte Maischefraktion nicht vollständig von Feststoffpartikeln befreit sein muss.

Soweit zur Gewinnung der vorgeklärten Maischefraktion eine Sieb- und/oder Filtrationsvorrichtung eingesetzt wird, sollte diese bevorzugt in der Art einer Querstromsiebvorrichtung bzw. Querstromfiltrationsvorrichtung ausgebildet sein. In derartigen Querstromsieb- oder Querstromfiltrationsvorrichtungen ist es vorgesehen, dass die Maische parallel zur Sieb- oder Filteroberfläche strömt, wobei die vorgeklärte Maischefraktion quer zur Strömungsrichtung durch die Sieb- oder Filteroberfläche abgezogen wird. Diese Art der Siebung bzw. der Filtration ist deshalb besonders vorteilhaft, da die abgefilterten bzw. abgesiebten Feststoffpartikel mit dem Strom der noch ungeklärten Maische durch die Sieb- und/oder Filtrationsvorrichtung transportiert werden können. Insbesondere kann der Teil der Maische, der am Ende die Querstromsieb- bzw. Querstromfiltervorrichtung verlässt, ohne durch eine Sieb- oder Filtervorrichtung gezogen worden zu sein, d.h. der Teil der Maische, der zusammen mit den gesamten Feststoffpartikeln weiterströmt, zurückbefördert werden, um gemeinsam mit der übrigen Maische in konventioneller Weise im Läuterbottich abgefiltert zu werden. Verluste an wertvoller Maische können somit vermieden werden. Außerdem kann eine Selbstreinigung der Sieb- oder Filtervorrichtung gewährleistet werden. Ob diese Sieb- oder Filtervorrichtung am, im oder separat um das Maischegefäß angeordnet ist, ist beliebig. Denkbar wäre z.B. eine Sieb- oder Filtervorrichtung die in die Wandung und/oder den Boden des Maischegefäßes installiert ist.

Alternativ bzw. additiv zum Einsatz einer Sieb- und/oder Filtrationsvorrichtung zur Entfernung der groben Feststoffpartikel aus der vorgeklärten Maischefraktion kann auch ein Absetzbehälter zur Anwendung kommen. Ein Teil der Maische mit den darin enthaltenen Feststoffpartikeln wird im Absetzbehälter gespeichert und der Schwerkraft ausgesetzt. Strömungsbewegungen in der Maische sollten im Absetzbehälter möglichst vermieden werden. Aufgrund der Schwerkraft sinken nämlich die Feststoffpartikel in der Maische nach unten ab und sammeln sich am Boden des Absetzbehälters. Dauert dieser Absetzprozess der Feststoffpartikel ausreichend lange an, so befindet sich in der Maische oberhalb der am Boden des Absetzbehälters gebildeten Schicht aus Feststoffpartikeln eine Maische, die im Wesentlichen keine groben Feststoffpartikel mehr enthält. Wird die Maische aus diesem Bereich oberhalb der am Boden gebildeten Schicht von Feststoffpartikeln abgezogen, kann dadurch eine ausreichend vorgeklärte Maischefraktion gewonnen werden.

Um ein zusätzliches Gefäß, das als Absetzbehälter dient, einzusparen, kann auch das Gefäß, das zur Durchführung des Maischprozesses dient, als Absetzbehälter dienen. In diesem Fall wird dann in dem Gefäß zunächst der Maischprozess durchgeführt und am Ende des Maischprozesses die Maische im Gefäß ruhig, d. h. ohne Rührbewegungen, stehen gelassen. Das Gefäß muss dann noch eine geeignete Entnahmeöffnung mit Entnahmeleitung aufweisen, so dass die Maische nach ausreichender Absetzung der Feststoffpartikel aus dem oberen Teil des Maischereservoirs entnommen werden kann.

Zur Durchführung des erfindungsgemäßen Verfahrens wird eine Vorrichtung zur Medienleitung an einem Läuterbottich vorgeschlagen. Diese Vorrichtung ist zunächst gattungsgemäß dahingehend eingerichtet, dass eine Flüssigkeit als Senkbodenvorlage in den Läuterbottich eingeleitet werden kann, bevor das Abmaischen erfolgt. Erfindungsgemäß ist die Vorrichtung zur Medienleitung dabei dadurch gekennzeichnet, dass eine zusätzliche Klärvorrichtung vorhanden ist, mit der aus zumindest einem Teil der gekochten Maische die groben Feststoffpartikel entfernt werden können. Die auf diese Weise in der Klärvorrichtung vorgeklärte Maischefraktion enthält keine groben Feststoffpartikel mehr und kann mittels der Vorrichtung, nämlich durch eine entsprechend angeschlossene Förderleitung bzw. mehrere Förderleitungen, als Senkbodenvorlage in den Läuterbottich gefördert werden. Auf diese Weise können die Sammelleitungen und/oder der Freiraum zwischen Senkboden und Läuterbottichboden mit der vorgeklärten Maische befüllt werden, ohne dass dazu zusätzliches Wasser in den Läuterbottich eingeleitet werden muss.

Als Klärvorrichtung zur Vorklärung der Maische kann insbesondere eine Sieb- oder Filtrationsvorrichtung vorgesehen sein.

Besonders vorteilhaft ist es dabei, wenn es sich bei der Sieb- oder Filtrationsvorrichtung um eine Querstromsieb- und/oder Querstromfiltrationsvorrichtung handelt, bei der die Maische quer zur Strömungsrichtung durch die Sieb- oder Filteroberfläche abgezogen wird.

Um eine hinreichende Vorklärung der vorgeklärten Maischefraktion zu gewährleisten und zugleich keinen unnötigen Reinigungsaufwand zu investieren, sollte eine Siebvorrichtung, insbesondere eine Querstromsiebvorrichtung, eingesetzt werden, bei der die maximale Siebweite 1 mm beträgt. Auf diese Weise kann eine vorgeklärte Maischefraktion gewonnen werden, die im Wesentlichen keine Feststoffpartikel mehr aufweist, deren Größe über 1 mm hinausgeht.

Alternativ bzw. additiv zum Einsatz einer Sieb- bzw. Filtervorrichtung kann auch ein Absetzbehälter zur Vorklärung der Maische Verwendung finden. Der Absetzbehälter muss dabei so ausgebildet sein, dass sich die groben Feststoffpartikel aufgrund der Schwerkraft auf dem Boden des Absetzbehälters absetzen können. Mittels einer Entnahmeleitung kann dann die vorgeklärte Maischefraktion aus dem Absetzbehälter entnommen werden, wobei darauf zu achten ist, dass die Entnahmeöffnung der Entnahmeleitung oberhalb des Bodens des Absetzbehälters angeordnet ist, um die Maische aus einem Maischereservoir entnehmen zu können, aus dem die groben Feststoffpartikel nach einer tolerierbaren Absetzzeit weitgehend durch den Absetzprozess entfernt sind.

Insbesondere kann auch das zur Durchführung des Maischprozesses verwendete Gefäß zugleich als Absetzbehälter eingesetzt werden. Dazu ist an dem ohnehin zum Maischen vorgesehenen Gefäß lediglich eine Entnahmeleitung mit geeignet angeordneter Entnahmeöffnung vorzusehen, um Maische aus dem Gefäß an einer Stelle entnehmen zu können, an der nach tolerierbarer Absetzzeit im Wesentlichen keine gröberen Feststoffpartikel mehr vorhanden sind.

Verschiedene Ausführungsformen der Erfindung sind in den Zeichnungen schematisch dargestellt und werden nachfolgend beispielhaft erläutert.

Es zeigen:
- Fig. 1: eine erste Ausführungsform einer Sudhausanlage zur Durchführung des erfindungsgemäßen Verfahrens;
- Fig. 2: eine zweite Ausführungsform einer Sudhausanlage zur Durchführung des erfindungsgemäßen Verfahrens;
- Fig. 3: eine dritte Ausführungsform einer Sudhausanlage zur Durchführung des erfindungsgemäßen Verfahrens;
- Fig. 4: eine vierte Ausführungsform einer Sudhausanlage zur Durchführung des erfindungsgemäßen Verfahrens;
- Fig. 5: eine fünfte Ausführungsform einer Sudhausanlage zur Durchführung des erfindungsgemäßen Verfahrens.

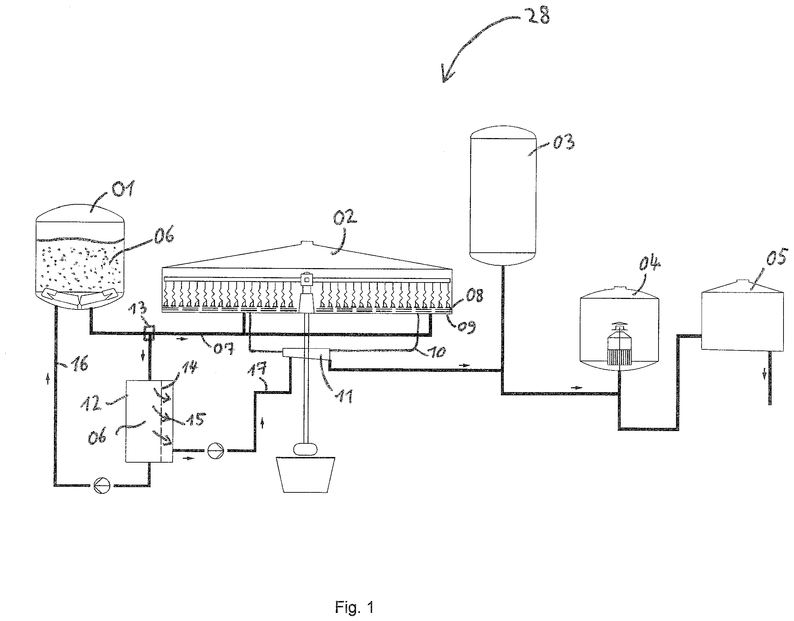

Fig. 1 zeigt schematisch eine Sudhausanlage 28, bei der lediglich die Anlageteile dargestellt sind, die zum Verständnis der Erfindung erforderlich sind. In konventioneller Weise umfasst die Sudhausanlage 28 ein Maischegefäß 01, einen Läuterbottich 02, einen Würzevorlauftank 03, eine Würzepfanne 04 und einen Whirlpool 05. Im Maischegefäß 01 kann die Maische 06 gemaischt werden. Über eine Abmaischleitung 07 kann die Maische 06 in den Läuterbottich 02 eingepumpt werden, wobei die Maische 06 dabei in den Bereich des Läuterbottichs 02 oberhalb des Senkbodens 08 gelangt. Über dem Senkboden 08 bildet sich dann während des Abläuterns ein Treberkuchen, durch den die Maische beim Durchfluss nach unten abgefiltert wird. Die abgefilterte Maische wird danach als Würze bezeichnet. Unterhab des Senkbodens 08 befindet sich mit einigen Zentimetern Abstand der Läuterbottichboden 09. Zwischen Senkboden 08 und Läuterbottichboden 09 ist ein Freiraum mit geringer Höhe gebildet, in dem sich die abgeläuterte Würze sammelt. Von unten münden in den Läuterbottichboden 09 Sammelleitungen 10, um die Würze nach dem Abläutern nach unten aus dem Läuterbottich abführen zu können. Die abgeläuterte Würze wird dann in einem Sammeltopf 11 gesammelt und über eine Würzeleitung weitergefördert. Wahlweise kann die abgeläuterte Würze über die Würzeleitung direkt in die Würzepfanne 04 eingepumpt oder in dem Würzevorlauftank 03 zwischengespeichert werden. Nach Durchlauf der Würzepfanne 04 kann die dann gekochte Würze mittels des Whirlpools 05 vom Heißtrub befreit werden.

Bevor die Maische 06 über die Abmaischleitung 07 in den Läuterbottich 02 eingepumpt wird, müssen die Sammelleitungen 10, der daran angeschlossene Sammeltopf 11 und der Zwischenraum zwischen dem Senkboden 08 und dem Läuterbottichboden 09 vollständig entlüftet werden, wozu eine sogenannte Senkbodenvorlage in diese Bereiche eingepumpt wird. Dieses Einpumpen geschieht bekanntermaßen vom tiefsten Punkt des Leitungssystems, um alle Luft zu entfernen.

Erfindungsgemäß ist vorgesehen, dass als Senkbodenvorlage statt des üblicherweise verwendeten Wassers vorgeklärte Maische eingesetzt wird. Bei der in Fig. 1 dargestellten Sudhausanlage 28 wird die vorgeklärte Maischefraktion in folgender Weise gewonnen. Die Sudhausanlage 28 ist zusätzlich mit einer Querstromsiebvorrichtung 12 ausgestattet. Die maximale Siebweite der Querstromsiebvorrichtung 12 beträgt dabei 1 mm. Durch die Öffnung eines Ventils 13 kann die Maische 06 in die Querstromsiebvorrichtung 12 eingeleitet werden. Beim Durchlaufen der Querstromsiebvorrichtung 12 können Feststoffpartikel mit einer Partikelgröße von größer als 1 mm aus der Maische 06 entfernt werden, um dadurch eine vorgeklärte Maischefraktion zu gewinnen. Wie in Fig. 1 schematisch dargestellt, ist dazu in der Querstromsiebvorrichtung 12 ein Sieb 14 mit einer maximalen Siebweite von 1 mm vorhanden. Die Maische 06 strömt dabei quer zur Oberfläche des Siebs 14. Der Anteil der Maische, der quer zur Strömungsrichtung durch das Sieb 14 hindurchtritt, bildet dann die vorgeklärte Maischefraktion 15. Die vorgeklärte Maischefraktion 15 enthält im Wesentlichen keine Feststoffpartikel mehr, die größer als 1 mm sind. Die übrige Maische 06, die nicht durch das Sieb 14 durchtritt, kann durch eine Verbindungsleitung 16 aus der Querstromsiebvorrichtung abgeleitet werden und dabei beispielsweise zurück in das Gefäß 01 gelangen.

Die vorgeklärte Maischefraktion 15 kann dagegen mittels einer Pumpe und durch die Förderleitung 17 in den Sammeltopf 11, die Sammelleitungen 10 und den Freiraum zwischen dem Läuterbottichboden 09 und dem Senkboden 08 eingepumpt werden. Auf diese Weise dient die vorgeklärte Maischefraktion 15 als Senkbodenvorlage, mit der die Luft aus den Sammelleitungen 10, dem Sammeltopf 11 und dem Zwischenraum zwischen dem Läuterbottichboden 09 und dem Senkboden 08 verdrängt wird.

Sobald die Senkbodenvorlage vollständig in den Läuterbottich 02 eingepumpt ist, kann das Ventil 13 umgeschaltet werden, um die Maische 06 in den Läuterbottich 02 abzumaischen. Anschließend kann die Maische 06 in bekannter Weise durch Filterung an dem sich über dem Senkboden 08 bildenden Treberkuchen abgeläutert werden. Eine Verdünnung der dadurch erhaltenen Würze durch die Senkbodenvorlage ist ausgeschlossen, da die vorgeklärte Maischefraktion 15 im Wesentlichen die gleiche Konzentration wie die abgeläuterte Maische 06 aufweist.

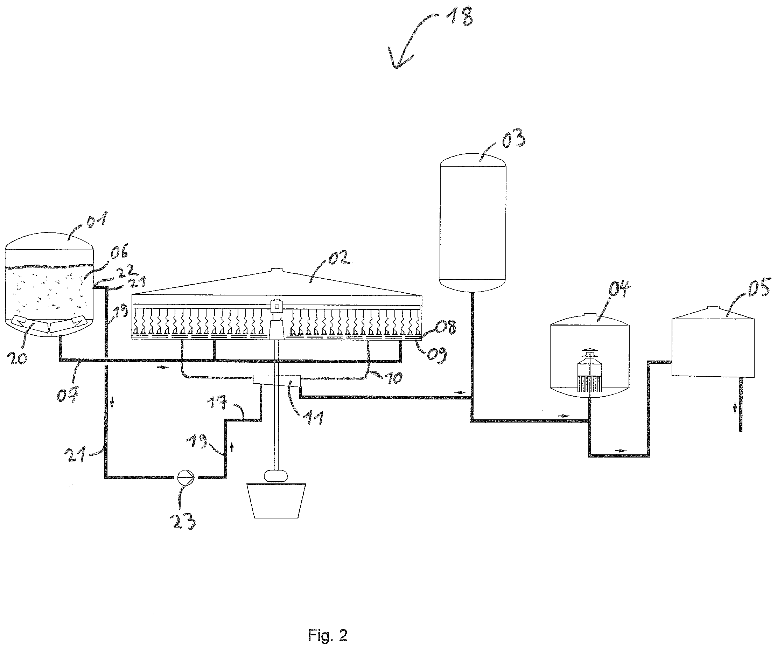

Fig. 2 zeigt eine zweite Sudhausanlage 18, deren Grundbestandteile, nämlich das Maischegefäß 01, der Läuterbottich 02, der Würzevorlauftank 03, die Würzepfanne 04 und der Whirlpool 05, die gleichen sind. Bei der in Fig. 2 dargestellten Sudhausanlage 18 wird die als Senkbodenvorlage notwendige vorgeklärte Maischefraktion 19 nicht durch Sieben der Maische 06, sondern mittels Durchführung eines Absetzprozesses gewonnen. Das Maischegefäß 01 dient dabei als Absetzbehälter. Nach dem Maischprozess wird der Rührer 20 im Gefäß 01 angehalten und die Maische 06 durch Vermeidung äußerer Strömungen einem Absetzprozess ausgesetzt. Während dieses Absetzprozesses setzen sich die Feststoffpartikel aufgrund der Schwerkraft am Boden des Gefäßes 01 zunehmend ab, wohingegen die Konzentration von Feststoffpartikeln im oberen Bereich des Maischereservoirs abnimmt. In diesem Bereich oberhalb des Bodens des Gefäßes 01 mündet eine Entnahmeleitung 21 mit ihrer Entnahmeöffnung 22 in das Gefäß 01. Dauert der Absetzprozess ausreichend lang an, so kann durch die Entnahmeleitung 21 Maische aus dem Gefäß 01 abgezogen werden, die im Wesentlichen keine groben Feststoffpartikel mehr enthält. Die Entnahmeleitung 21 mündet über die Pumpe 23 in die Förderleitung 17, so dass die durch den Absetzprozess erhaltene vorgeklärte Maischefraktion 19 aus dem Gefäß 01 durch die Entnahmeleitung 21 und die Förderleitung 17 in den Sammeltopf 11, die Sammelleitungen 10 und den Freiraum zwischen dem Läuterbottichboden 09 und dem Senkboden 08 als Senkbodenvorlage eingepumpt werden kann.

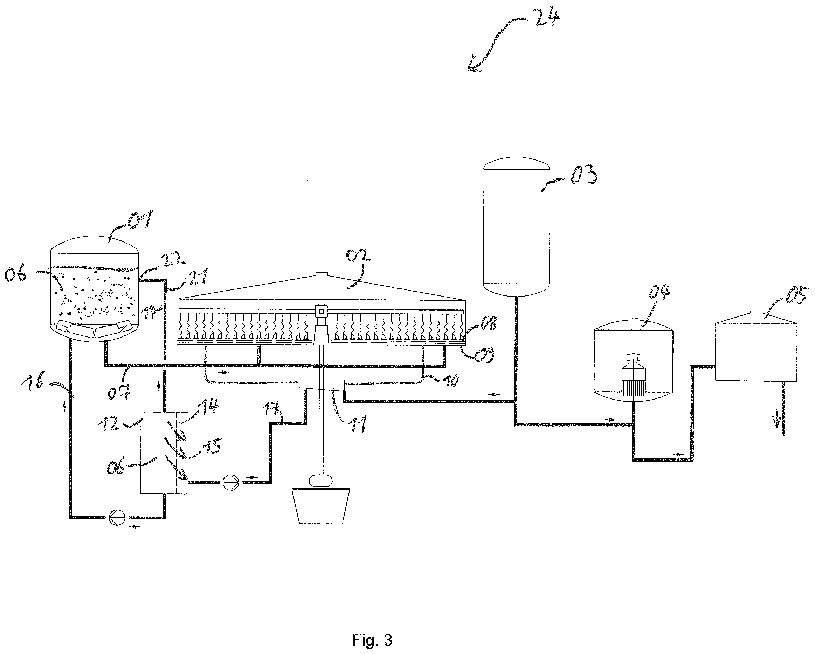

Fig. 3 zeigt eine weitere Sudhausanlage 24. Die Sudhausanlage 24 stellt eine Kombination der Sudhausanlagen 28 und 18 dar. Bei der Sudhausanlage 24 dient das Gefäß 01 wiederum als Absetzbehälter, so dass durch die Entnahmeleitung 21 Maische entnommen werden kann, die bereits eine erheblich geringere Konzentration an Feststoffpartikeln enthält. Diese bereits grob vorgeklärte Maische wird dann durch die Entnahmeleitung 21 in die Querstromsiebvorrichtung 12 eingeleitet und mittels des Siebs 14 weiter geklärt. Die vorgeklärte Maischefraktion 15 kann dann wiederum durch Antrieb der Pumpe durch die Förderleitung 17 als Senkbodenvorlage in den Läuterbottich 02 eingepumpt werden. Durch die Kombination aus Absetzprozess und Siebprozess wird erreicht, dass zum einen der Aufwand zum Absieben der groben Feststoffpartikel herabgesetzt wird und zum anderen die für die Durchführung des Absetzprozesses notwendige Zeit reduziert werden kann.

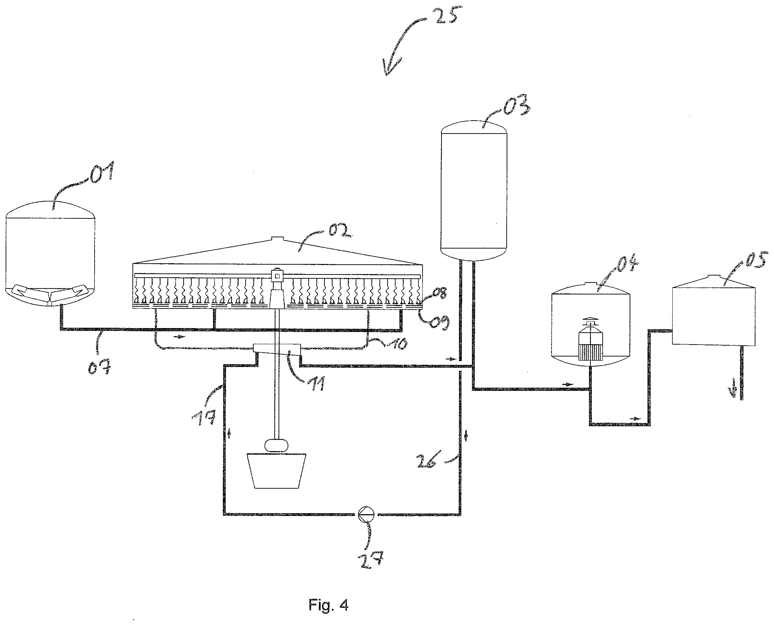

Fig. 4 zeigt eine weitere Variante 25 einer Sudhausanlage. Bei der Sudhausanlage 25 wird auf eine zusätzliche Klärvorrichtung zur Gewinnung der vorgeklärten Maischefraktion verzichtet. Stattdessen wird die Förderleitung 17 über eine Verbindungsleitung 26 mit dem Würzevorlauftank 03 verbunden. Durch die Pumpe 27 kann die durch Abläutern des vorhergehenden Suds erhaltene Würze, die im Würzevorlauftank 03 zwischengespeichert ist, als Senkbodenvorlage zurück in den Läuterbottich gepumpt werden. Diese Variante erfordert keinerlei zusätzliche Einrichtungen an der Sudhausanlage 25, abgesehen von der Verbindungsleitung 26, der Pumpe 27 und der Förderleitung 17, und ist deshalb besonders preisgünstig zu realisieren. Da der Läuterbottich 02 und der Vorlauftank 03 sowieso miteinander verbunden sind, kann bei entsprechend hoher Aufstellung des Vorlauftanks 03 die Senkbodenvorlage auch ohne Pumpe 27 durchgeführt werden, indem die Würze einfach durch die Würzeleitung 29 rückwärts geleitet wird. Dies reduziert den Aufwand bezüglich Verrohrung und Pumpen nochmals deutlich.

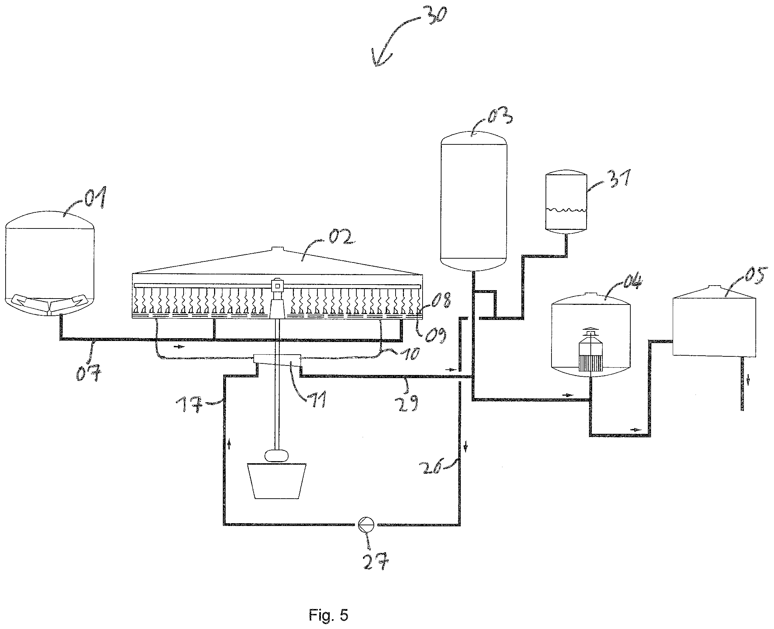

Fig. 5 zeigt eine weitere Variante 30 einer Sudhausanlage. Die Sudhausanlage 30 ähnelt Sudhausanlage 25, nur dass zusätzlich ein Tank 31 installiert ist. Dieser ist an die Würzeleitung 29 des Läuterbottichs 02 angeschlossen. In diesem Tank 31 wird ein Teil der Vorderwürze aus dem Läuterbottich 02 gesammelt. Die Menge ist so berechnet, dass sie dem notwendigen Volumen der Senkbodenvorlage entspricht. Beim Abziehen der Vorderwürze wird eine entsprechende Menge im Tank 31 zwischengespeichert und bei einem der nachfolgenden Sude als Senkbodenvorlage in den Läuterbottich 02 geleitet. Dies kann wiederum über die Verbindungsleitung 26, die Pumpe 27 und die Förderleitung 17 erfolgen. Aber auch hier ist das bereits beschriebene rückwärts Leiten der Würze über die Leitung 29 möglich. Vorteilhaft wäre auch eine Zwischenspeicherung einer entsprechenden Menge der Trübwürze des vorigen Sudes in diesem Tank, um diese Trübwürze als Senkbodenvorlage zu verwenden.

## Patentansprüche

1. Verfahren zur Gewinnung von Würze durch Abläutern von Maische (06) mit einem Läuterbottich (02), wobei der Läuterbottich (02) einen Läuterbottichboden (09) und einen über dem Läuterbottichboden (09) beabstandet angeordneten Senkboden (08) aufweist, und wobei im Läuterbottichboden (09) Sammelöffnungen mit daran angeschlossenen Sammelleitungen (10) vorgesehen sind, durch die die Würze nach dem Abläutern aus dem Läuterbottich (02) abgeführt werden kann, mit folgenden Verfahrensschritten:
a) Gewinnung einer vorgeklärten Maischefraktion (15, 19), die keine groben Feststoffpartikel enthält;
b) Befüllung zumindest der Sammelleitungen (10) und/oder des Freiraums zwischen Senkboden (08) und Läuterbottichboden (09) mit Maische aus der vorgeklärten Maischefraktion (15, 19) als Senkbodenvorlage;
c) Befüllung des Läuterbottichs (02) mit Maische (06);
d) Beginn des Abläuterns zur Gewinnung von Würze durch Filtration der Maische (06) am Treberkuchen im Läuterbottich (02).

2. Verfahren nach Anspruch 1,
**dadurch gekennzeichnet,**
**dass** die vorgeklärte Maischefraktion (15, 19) keine Feststoffpartikel mit eine Partikelgröße von größer 1 mm aufweist.

3. Verfahren nach Anspruch 1 oder 2,
**dadurch gekennzeichnet,**
**dass** die Würzekonzentration der vorgeklärten Maischefraktion (15, 19) der Vorderwürzekonzentration der abzuläuternden Maische (06) entspricht.

4. Verfahren nach einem der Ansprüche 1 bis 3,
**dadurch gekennzeichnet,**
**dass** zur Gewinnung der vorgeklärten Maischefraktion ein Teil der mittels des Läuterbottichs (02) abgeläuterten Vorderwürze und/oder Würze eines vorhergehenden Sudes zwischengespeichert und als Senkbodenvorlage über zumindest eine Verbindungsleitung (26) in den Läuterbottich (02) eingeleitet wird.

5. Verfahren nach einem der Ansprüche 1 bis 3,
**dadurch gekennzeichnet,**
**dass** zur Gewinnung der vorgeklärte Maischefraktion (15) die Maische nach dem Maischen eines Sudes aufgeteilt wird, wobei ein Teil der Maische in einer Klärvorrichtung (12) geklärt wird, um die groben Feststoffpartikel aus der Maische (06) zu entfernen.

6. Verfahren nach Anspruch 5,
**dadurch gekennzeichnet,**
**dass** zur Gewinnung der vorgeklärten Maischefraktion (15) der abgezweigte Teil der Maische zur Entfernung der groben Feststoffpartikel durch eine Sieb- und/oder Filtrationsvorrichtung (12) geleitet wird.

7. Verfahren nach Anspruch 6,
**dadurch gekennzeichnet,**
**dass** der abgezweigte Teil der Maische in der Sieb- und/oder Filtrationsvorrichtung (12) parallel zur Oberfläche des Siebs (14) oder Filters strömt und die vorgeklärte Maischefraktion (15) quer zur Strömungsrichtung durch die Oberfläche des Siebs (14) oder Filters abgezogen wird.

8. Verfahren nach Anspruch 5,
**dadurch gekennzeichnet,**
**dass** zur Gewinnung der vorgeklärten Maischefraktion (19) zumindest ein Teil der Maische (06) in einem Absetzbehälter gespeichert wird, wobei sich die groben Feststoffpartikel aufgrund der Schwerkraft auf dem Boden des Absetzbehälters absetzen, und wobei die vorgeklärte Maischefraktion (19) oberhalb des Bodens des Absetzbehälters entnommen wird.

9. Verfahren nach Anspruch 8,
**dadurch gekennzeichnet,**
**dass** als Absetzbehälter das zum Maischen verwendete Gefäß (01) eingesetzt wird, wobei der Absetzprozess zur Abtrennung der groben Feststoffpartikel nach Ende des Maischens durchgeführt wird.

10. Vorrichtung zur Gewinnung von Würze mit einem Läuterbottich (02), wobei der Läuterbottich (02) einen Läuterbottichboden (09) und einen über dem Läuterbottichboden (09) beabstandet angeordneten Senkboden (08) aufweist, und wobei im Läuterbottichboden (09) Sammelöffnungen mit daran angeschlossenen Sammelleitungen (10) vorgesehen sind, durch die die Würze nach dem Abläutern aus dem Läuterbottich (02) abgeführt werden kann, und mit einem Maischgefäß (01) zur Aufnahme von Maische (06), die grobe Feststoffpartikel enthält,
**dadurch gekennzeichnet,**
**dass** eine Klärvorrichtung (12, 01) vorhanden ist, in der aus zumindest einem Teil der Maische die groben Feststoffpartikel entfernt werden können, wobei die dadurch gewonnene vorgeklärte Maischefraktion (15, 19) keine groben Feststoffpartikel mehr enthält, und wobei die vorgeklärte Maischefraktion (15, 19) durch zumindest eine Förderleitung (17) als Senkbodenvorlage in den Läuterbottich (02) gefördert werden kann, um die Sammelleitungen (10) und/oder den Freiraum zwischen Senkboden (08) und Läuterbottichboden (09) mit Maische aus der vorgeklärten Maischefraktion (15, 19) zu befüllen.

11. Vorrichtung nach Anspruch 10,
**dadurch gekennzeichnet,**
**dass** die Klärvorrichtung in der Art einer Sieb- und/oder Filtrationsvorrichtung (12) ausgebildet ist.

12. Vorrichtung nach Anspruch 11,
**dadurch gekennzeichnet,**
**dass** die Sieb- und/oder Filtrationsvorrichtung (12) in der Art einer Querstromsieb- und/oder Querstromfiltrationsvorrichtung ausgebildet ist, in der die Maische quer zur Strömungsrichtung durch die Oberfläche des Siebs (14) oder Filters abgezogen wird.

13. Vorrichtung nach Anspruch 12,
**dadurch gekennzeichnet,**
**dass** die maximale Siebweite der Siebvorrichtung (12) 1 mm beträgt.

14. Vorrichtung nach Anspruch 10,
**dadurch gekennzeichnet,**
**dass** die Klärvorrichtung in der Art eines Absetzbehälters ausgebildet ist, in dem sich die groben Feststoffpartikel aufgrund der Schwerkraft auf dem Boden des Absetzbehälters absetzen können, wobei die vorgeklärte Maischefraktion (19) durch eine Entnahmeleitung (21) aus dem Absetzbehälter entnommen werden kann, und wobei die Entnahmeöffnung (22) der Entnahmeleitung (21) oberhalb des Bodens des Absetzbehälters angeordnet ist.

15. Vorrichtung nach Anspruch 14,
**dadurch gekennzeichnet,**
**dass** das zum Maischen verwendete Gefäß (01) zugleich als Absetzbehälter ausgebildet ist, wobei das Gefäß (01) oberhalb des Bodens eine Entnahmeöffnung (22) an einer Entnahmeleitung (21) aufweist, durch die die vorgeklärte Maischefraktion (19) aus dem Gefäß (01) entnommen werden kann.

## Claims

1. A method for obtaining wort by clarifying mash (06) using a lauter tun (02), the lauter tun comprising a lauter tun bottom (09) and a false bottom (08) arranged at a distance above the lauter tun bottom (09), collection openings having collection pipes (10) attached thereto being provided in the lauter tun bottom (09), the wort being able to be discharged via said collection pipes (10) after being lautered from the lauter tun (02), having the following method steps:
a) obtaining a pre-clarified mash fraction (15, 19) not containing any coarse solid particles;
b) filling at least the collection pipes (10) and/or the free space between the false bottom (08) and the lauter tun bottom (09) with mash from the pre-clarified mash fraction (15, 19) as a false bottom seal;
c) filling the lauter tun (02) with mash (06);
d) commencing clarification in order to obtain wort by filtering the mash (06) at the spent grains bed in the lauter tun (02).

2. The method according to claim 1,
**characterised in that**
the pre-clarified mash fraction (15, 19) does not contain any solid particles having a particle size larger than 1 mm.

3. The method according to claim 1 or 2,
**characterised in that**
the wort concentration of the pre-clarified mash fraction (15, 19) corresponds to the first wort concentration of the mash (06) to be lautered.

4. The method according to any one of the claims 1 to 3,
**characterised in that**
for obtaining the pre-clarified mash fraction, a part of the first wort lautered by means of the lauter tun (02) and/or of the wort of a preceding brew is temporarily stored and supplied as a false bottom seal into the lauter tun (02) via at least one connection pipe (26).

5. The method according to any one of the claims 1 to 3,
**characterised in that**
for obtaining the pre-clarified mash fraction (15), the mash is divided after mashing a brew, a part of the mash being clarified in a clarification unit (12) in order to remove the coarse solid particles from the mash (06).

6. The method according to claim 5,
**characterised in that**
for obtaining the pre-clarified mash fraction (15), the branched-off part of the mash is conducted through a sieve and/or filtration unit (12) in order to remove the coarse solid particles.

7. The method according to claim 6,
**characterised in that**
the branched-off part of the mash flows in the sieve and/or filtration unit (12) parallel to the surface of the sieve (14) or filter, and the pre-clarified mash fraction (15) is discharged transverse to the direction of flow through the surface of the sieve (14) or filter.

8. The method according to claim 5,
**characterised in that**
for obtaining the pre-clarified mash fraction (19), at least one part of the mash (06) is stored in a settling container, the coarse solid particles settling on the bottom of the settling container owing to gravity, and the pre-clarified mash fraction (19) being removed above the bottom of the settling container.

9. The method according to claim 8,
**characterised in that**
the container (01) used for mashing is used as the settling container, the settling process being carried out for separating the coarse solid particles after terminating mashing.

10. A device for obtaining wort using a lauter tun (02), the lauter tun comprising a lauter tun bottom (09) and a false bottom (08) arranged at a distance above the lauter tun bottom (09), collection openings having collection pipes (10) connected thereto being provided in the lauter tun bottom (09), the wort being able to be discharged via said collection pipes (10) after being lautered from the lauter tun (02), and comprising a mash container (01) for receiving mash (06) containing coarse solid particles,
**characterised in that**
a clarification unit (12, 01) is provided, in which the coarse solid particles can be removed from at least one part of the mash, the pre-clarified mash fraction (15, 19) thus obtained no longer containing any coarse solid particles, said pre-clarified mash fraction (15, 19) being able to be conveyed as a false bottom seal into the lauter tun (02) via at least one conveyor pipe (17) in order to fill the collection pipes (10) and/or the free space between the false bottom (08) and the lauter tun bottom (09) with mash from the pre-clarified mash fraction (15, 19).

11. The device according to claim 10,
**characterised in that**
the clarification unit is realised in the make of a sieve and/or filtration unit (12).

12. The device according to claim 11,
**characterised in that**
the sieve and/or filtration unit (12) is realised in the make of a transverse-flow-sieve and/or transverse-flow-filtration unit, in which the mash is discharged transverse to the flow direction through the surface of the sieve (14) or filter.

13. The device according to claim 12,
**characterised in that**
the maximal sieve width of the sieve unit (12) is 1 mm.

14. The device according to claim 10,
**characterised in that**
the clarification device is realised in the make of a settling container, in which the coarse solid particles can settle on the bottom of the settling container owing to gravity, the pre-clarified mash fraction (19) being able to be removed from the settling container via a removal pipe (21), and the removal opening (22) of the removal pipe (21) being arranged above the bottom of the container.

15. The device according to claim 14,
**characterised in that**
the container (01) used for mashing is simultaneously realised as a settling container, said container (01) comprising a removal opening (22) at a removal pipe (21) above the bottom, the pre-clarified mash fraction (19) being able to be removed from the container (01) via the removal pipe (21).

## Revendications

1. Procédé pour obtenir du moût par filtration de trempe (06) en utilisant une cuve de filtration (02), ladite cuve de filtration comprenant un fond de cuve de filtration (09) et un faux fond (08) disposé à une distance au-dessus du fond de cuve de filtration (09), des ouvertures de collection ayant des tuyaux de collection (10) reliés à ces dernières étant prévues dans le fond de cuve de filtration (09), le moût pouvant être déchargé de la cuve de filtration (02) à travers lesdits tuyaux de collection (10) après la filtration, ayant les étapes de procédé suivantes :
a) obtenir une fraction de trempe (15, 19) préclarifiée, qui ne contient pas de particules solides grosses ;
b) remplir au moins les tuyaux de collection (10) et/ou l'espace libre entre le faux fond (08) et le fond de cuve de filtration (09) avec de la trempe de la fraction de trempe (15, 19) préclarifiée en tant que blocage de faux fond ;
c) remplir la cuve de filtration (02) avec de la trempe (06) ;
d) commencer la filtration pour obtenir du moût par la filtration de la trempe (06) au gâteau de drêches dans la cuve de filtration (02).

2. Procédé selon la revendication 1,
**caractérisé en ce que**
la fraction de trempe (15, 19) préclarifiée ne contient pas de particules solides ayant une taille de particule plus grande que 1 mm.

3. Procédé selon la revendication 1 ou 2,
**caractérisé en ce que**
la concentration du moût de la fraction de trempe (15, 19) préclarifiée correspond à la concentration de premier moût de la trempe (06) à être filtrée.

4. Procédé selon l'une quelconque des revendications 1 à 3,
**caractérisé en ce que**
pour obtenir la fraction de trempe préclarifiée, une partie de premier moût filtré au moyen de la cuve de filtration (02) et/ou du moût d'un brassin précédent est stockée temporairement et est introduite dans la cuve de filtration (02) à travers au moins un tuyau de connexion (26) en tant que blocage de faux fond.

5. Procédé selon l'une quelconque des revendications 1 à 3,
**caractérisé en ce que**
pour obtenir la fraction de trempe (15) préclarifiée, la trempe est divisée après le transfert d'un brassin, une partie de la trempe étant clarifiée dans une unité de clarification (12) afin d'enlever les particules solides grosses de la trempe (06).

6. Procédé selon la revendication 6,
**caractérisé en ce que**
pour obtenir la fraction de trempe (15) préclarifiée, la partie de la trempe divisée est conduite à travers une unité de passoire et/ou de filtration (12) pour enlever les particules solides grosses.

7. Procédé selon la revendication 6,
**caractérisé en ce que**
la partie de la trempe divisée s'écoule dans l'unité de passoire et/ou de filtration (12) parallèlement à la surface de la passoire (14) ou du filtre, et la fraction de trempe (15) préclarifiée est déchargée à travers la surface de la passoire (14) ou du filtre transversalement au sens d'écoulement.

8. Procédé selon la revendication 5,
**caractérisé en ce que**
pour obtenir la fraction de trempe (19) préclarifiée, au moins une partie de la trempe (06) est stockée dans un récipient de décantation, les particules solides grosses se décantant sur le fond du récipient de décantation en raison de la gravitation, et la fraction de trempe (19) préclarifiée étant enlevée au-dessus du fond du récipient de décantation.

9. Procédé selon la revendication 8,
**caractérisé en ce que**
le récipient (01) utilisé pour le transfert de la trempe est utilisé en tant que récipient de décantation, le procédé de décantation pour séparer les particules solides grosses étant réalisé après la terminaison du transfert de la trempe.

10. Dispositif pour obtenir du moût en utilisant une cuve de filtration (02), ladite cuve de filtration comprenant un fond de cuve de filtration (09) et un faux fond (08) disposé à une distance au-dessus du fond de cuve de filtration (09), des ouvertures de collection ayant des tuyaux de collection (10) reliés à ces dernières étant prévues dans le fond de cuve de filtration (09), le moût pouvant être déchargé à travers lesdits tuyaux de collection (10) après la filtration, et comprenant un récipient de trempe (01) pour recevoir de la trempe (06) contenant des particules solides grosses,
**caractérisé en ce qu'**
une unité de clarification (12, 01) est prévue, dans laquelle les particules solides grosses peuvent être enlevées d'au moins une partie de la trempe, la fraction de trempe (15, 19) préclarifiée ainsi obtenue ne contenant plus de particules solides grosses, et la fraction de trempe (15, 19) préclarifiée pouvant être convoyée dans la cuve de filtration (02) à travers au moins un tuyau de convoyeur (17) en tant que blocage de faux fond afin de remplir les tuyaux de collection (10) et/ou l'espace libre entre le faux fond (08) et le fond de cuve de filtration (09) avec de la trempe de la fraction de trempe (15, 19) préclarifiée.

11. Dispositif selon la revendication 10,
**caractérisé en ce que**
l'unité de clarification est réalisée en tant qu'unité de passoire et/ou de filtration (12).

12. Dispositif selon la revendication 11,
**caractérisé en ce que**
l'unité de passoire et/ou de filtration (12) est réalisée en tant qu'unité de passoire d'écoulement transversal et/ou de filtration d'écoulement transversal, dans laquelle la trempe est déchargée à travers la surface de la passoire (14) ou du filtre transversalement au sens d'écoulement.

13. Dispositif selon la revendication 12,
**caractérisé en ce que**
la largeur de passoire maximale de l'unité de passoire (12) est 1 mm.

14. Dispositif selon la revendication 10,
**caractérisé en ce que**
l'unité de clarification est réalisée en tant que récipient de décantation, dans lequel les particules solides grosses peuvent se décanter sur le fond du récipient de décantation en raison de la gravitation, la fraction de trempe (19) préclarifiée pouvant être enlevée du récipient de décantation à travers un tuyau d'enlèvement (21), et l'ouverture d'enlèvement (22) du tuyau d'enlèvement (21) étant disposée au-dessus du fond du récipient de décantation.

15. Dispositif selon la revendication 14,
**caractérisé en ce que**
le récipient (01) utilisé pour le transfert de la trempe est réalisé en même temps en tant que récipient de décantation, ledit récipient (01) comprenant une ouverture d'enlèvement (22) à un tuyau d'enlèvement (21) au-dessus du fond, la fraction de trempe (19) préclarifiée pouvant être enlevée du récipient (01) à travers le tuyau d'enlèvement (21).
